# EUROPEAN PATENT APPLICATION

(11) **EP 4 227 287 A1**
(43) Date of publication of application: **16.08.2023**
(21) Application number: 21877690.4
(22) Date of filing: 07.10.2021
(51) Int. Cl.: C07C 19/08, C07C 21/18, C09K 5/04

(54) **COMPOSITION, METHOD FOR PRESERVING REFRIGERANT, AND METHOD FOR SUPPRESSING POLYMERIZATION OF REFRIGERANT**

(30) Priority: 09.10.2020 JP 2020171566
(71) Applicant: Daikin Industries, Ltd., Osaka-shi, Osaka 530-0001 (JP)
(72) Inventor: YOSHIMURA, Takashi, Osaka-shi, Osaka 530-0001 (JP); GOTOU, Tomoyuki, Osaka-shi, Osaka 530-0001 (JP); YOTSUMOTO, Yuuki, Osaka-shi, Osaka 530-0001 (JP)
(74) Representative: Hoffmann Eitle
(86) International application number: PCT/JP2021/037082
(87) International publication number: WO 2022/075391

(57) **Abstract**

An object of the present disclosure is to provide a composition with a limited polymerization of a refrigerant, a storage method, and a polymerization inhibition method. The composition contains (1) a refrigerant and (2) oxygen, wherein the concentration of the oxygen (2) is 1 ppm or more by volume at a temperature of 25°C.

## Description

### Technical Field

The present disclosure relates to a composition, a method for storing a refrigerant, and a method for inhibiting the polymerization of a refrigerant.

### Background Art

PTL 1 discloses a method for storing 2,3,3,3-tetrafluoropropene in a gas-liquid state composed of a gas phase and a liquid phase in a closed container, wherein the oxygen concentration in the gas phase is adjusted to 3 ppm by volume or more and less than 1,000 ppm by volume at a temperature of 25°C.

PTL 2 discloses a method for storing trifluoroethylene in a closed storage container, wherein trifluoroethylene is stored in the storage container in such a state that a gas phase and a liquid phase coexist, and the oxygen concentration in the gas phase at a temperature of 25°C is kept at 3 to 1,000 ppm by volume.

### Citation List

### Patent Literature

PTL 1: Patent No. 6377524B
PTL 2: Patent No. 6421752B

### Summary of Invention

### Technical Problem

An object of the present disclosure is to provide a composition with a limited polymerization of a refrigerant, a storage method, and a polymerization inhibition method.

### Solution to Problem

The present disclosure includes the subject matter described in the following Items.

### Item 1.

A composition comprising
(1) a refrigerant, and
(2) oxygen,
   the refrigerant (1) comprising
      (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
      (1-2) at least one component selected from the group consisting of a compound represented by formula (1) and trifluoroiodomethane (CF₃I),
   the compound being represented by formula (1): 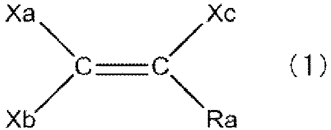 wherein
      Xa, Xb, and Xc represent a hydrogen atom or a fluorine atom, and
      Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or fluorine atom as a substituent), wherein
   the concentration of the oxygen (2) is 1 ppm by volume or more and 10,000 ppm by volume or less at a temperature of 25°C.

### Item 2.

The composition according to Item 1,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.

### Item 3.

A method for storing a refrigerant (1) in a gas-liquid state composed of a gas phase and a liquid phase in an airtight container,
the refrigerant (1) comprising
   (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
   (1-2) at least one component selected from the group consisting of a compound represented by formula (1) and trifluoroiodomethane (CF₃I),
the compound being represented by formula (1): 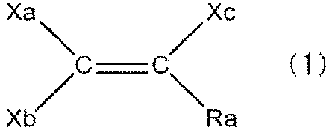 wherein
   Xa, Xb, and Xc represent a hydrogen atom or a fluorine atom, and
   Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

### Item 4.

The method according to Item 3,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.

### Item 5.

A method for inhibiting polymerization of a refrigerant (1) in a gas-liquid state composed of a gas phase and a liquid phase in an airtight container,
the refrigerant (1) comprising
   (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
   (1-2) at least one component selected from the group consisting of a compound represented by formula (1) and trifluoroiodomethane (CF₃I),
the compound being represented by formula (1): 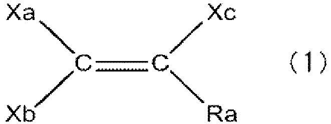 wherein
   Xa, Xb, and Xc represent a hydrogen atom or a fluorine atom, and
   Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

### Item 6.

The method according to Item 5,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.

### Advantageous Effects of Invention

The method of the present disclosure enables good storage of a refrigerant.

The method of the present disclosure enables good inhibition of the polymerization of a refrigerant.

### Description of Embodiments

The present inventors conducted extensive research with the aim of improving the storage stability and polymerization inhibition of a refrigerant in a refrigerant composition containing the refrigerant and oxygen, and found that the object can be achieved by allowing, as a refrigerant, (1-1) at least one component selected from the group consisting of HFO-1132(Z), HFO-1132a, HFO-1123, and FO-1114 to be present with (1-2) at least one component selected from the group consisting of a compound represented by formula (1) (preferably HFO-1234yf) and CF₃I.

The following describes embodiments encompassed by the present disclosure in detail.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given.

Refrigerants are broadly divided into fluorocarbon compounds and non-fluorocarbon compounds in terms of the structure of the compounds. Fluorocarbon compounds include hydrochlorofluorocarbons (HCFC) and hydrofluorocarbons (HFC). Non-fluorocarbon compounds include propane (R290), propylene (R1270), butane (R600), and isobutane (R600a).

In the present specification, the phrase "a composition comprising a refrigerant" at least includes (1) a refrigerant itself (including a mixture of refrigerants (refrigerant mixtures)), (2) a composition that further comprises other components and that can be mixed with at least a refrigeration oil to obtain a working fluid for a refrigerating machine, and (3) a working fluid for a refrigerating machine containing a refrigeration oil (refrigeration working fluid).

In the present specification, of these three embodiments, the composition (2) is referred to as a "refrigerant composition" to distinguish it from a refrigerant itself (including a mixture of refrigerants).

Further, in the present specification, the working fluid for a refrigerating machine (3) is referred to as a "refrigeration oil-containing working fluid" (working fluid containing refrigeration oil) to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment.

In other words, this type of alternative means that the same equipment is operated with an alternative refrigerant. Embodiments of this type of "alternative" include drop-in alternatives, nearly drop-in alternatives, and retrofits, in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" (refrigerator) refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the terms "comprise," "contain," and "include" encompass the concepts of containing, including, consisting essentially of, and consisting of.

In the present specification, when a numerical range is stated stepwise, the upper-limit value or the lower-limit value of one numerical range can be randomly combined with the upper-limit value or the lower-limit value of another numerical range.

In the present specification, the upper-limit values or the lower-limit values of the numerical ranges stated in the present specification may be replaced with a value shown in the Examples or a value that can be unambiguously derived from the Examples.

In the present specification, the main refrigerants include the following.
Cis-1,2-difluoroethylene: HFO-1132(Z) ((Z)-1,2-difluoroethylene)
1,1-Difluoroethylene: HFO-1132a
Trifluoroethylene: HFO-1123
Tetrafluoroethylene: FO-1114
2,3,3,3-Tetrafluoropropene: HFO-1234yf
Trifluoroiodomethane: CF₃I

The phrase "(E/Z)" indicates an E isomer (trans form) and/or a Z isomer (cis form).

### [1] Composition

### (1) Refrigerant

The composition of the present disclosure comprising
(1) a refrigerant, and
(2) oxygen,
   the refrigerant (1) comprising
      (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
      (1-2) at least one component selected from the group consisting of a compound represented by formula (1) and trifluoroiodomethane (CF₃I),
   the compound being represented by formula (1) 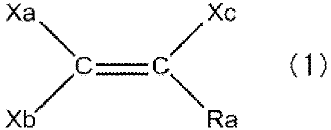 wherein
      Xa, Xb, and Xc represent a hydrogen atom or a fluorine atom, and
      Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent), wherein
   the concentration of the oxygen (2) is 1 ppm by volume or more and 10,000 ppm by volume or less at a temperature of 25°C.

In the composition of the present disclosure, in a refrigerant composition containing (1) a refrigerant and (2) oxygen, the refrigerant (1) preferably allows (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114) to be present with (1-2) at least one component selected from the group consisting of a compound represented by formula (1) (preferably 2,3,3,3-tetrafluoropropene (HFO-1234yf)) and trifluoroiodomethane (CF₃I).

Specifically, the refrigerant composition contains, as the refrigerant (1), (1-1) at least one component selected from the group consisting of HFO-1132(Z), HFO-1132a, HFO-1123, and FO-1114, and (1-2) at least one component selected from the group consisting of a compound represented by formula (1) (preferably HFO-1234yf) and CF₃I.

In the composition of the present disclosure, preferably, the refrigerant (1-1) is present in an amount of 10% by mass or higher and 90% by mass or lower, and the refrigerant (1-2) is present in an amount of 10% by mass or higher and 90% by mass or lower based on the entire refrigerant.

In the composition of the present disclosure, preferably, when the refrigerant (1) is allowed to be present together, (1-1) at least one component selected from the group consisting of HFO-1132(Z), HFO-1132a, HFO-1123, and FO-1114 in an amount of 90% by mass or lower and 10% by mass or higher is allowed to present together with (1-2) at least one component selected from the group consisting of a compound represented by formula (1) (preferably HFO-1234yf) and CF₃I in an amount of 10% by mass or higher and 90% by mass or lower based on the entire refrigerant.

Due to the unsaturated bond, the refrigerant that contains (1-1) at least one component selected from the group consisting of HFO-1132(Z), HFO-1132a, HFO-1123, and FO-1114 is not very stable, and may self-polymerize over time during storage (preservation) or transportation; thus, the quality of the refrigerant may deteriorate.

Storing the refrigerant together with oxygen may allow a polymer of the refrigerant to form, possibly causing pressure to decrease.

Because of (1-2) at least one component selected from the group consisting of a compound represented by formula (1) (preferably HFO-1234yf) and CF₃I allowed to be present together with (or added to) (1-1) at least one component selected from the group consisting of HFO-1132(Z), HFO-1132a, HFO-1123, and FO-1114 as the refrigerant (1), the composition of the present disclosure enables the polymerization rate of the mixture of refrigerants to decrease to around the polymerization rate of the compounds added.

Preferably, the refrigerant (1) does not have a decrease in pressure and shows excellent storage stability by allowing (1-1) at least one component selected from the group consisting of HFO-1132(Z), HFO-1132a, HFO-1123, and FO-1114 in an amount of 90% by mass or lower, and 10% by mass or higher to be present with (1-2) at least one component selected from the group consisting of a compound represented by formula (1) (preferably HFO-1234yf) and CF₃I in an amount of 10% by mass or higher, and 90% by mass or lower (preferred threshold) based on the entire refrigerant.

Preferably, the composition of the present disclosure is a refrigerant composition that can decrease the polymerization rate of (1-1) at least one component selected from the group consisting of HFO-1132(Z), HFO-1132a, HFO-1123, and FO-1114, and that can inhibit the polymerization of (1-1) at least one component selected from the group consisting of HFO-1132(Z), HFO-1132a, HFO-1123, and FO-1114 by allowing, as the refrigerant (1), (1-1) at least one component selected from the group consisting of HFO-1132(Z), HFO-1132a, HFO-1123, and FO-1114 as the primary component to be present together with (1-2) at least one component selected from the group consisting of a compound represented by formula (1) (preferably HFO-1234yf) and CF₃I as the secondary component.

In the refrigerant (1), the refrigerant that is (1-1) at least one component selected from the group consisting of HFO-1132(Z), HFO-1132a, HFO-1123, and FO-1114 is a component that can undergo polymerization, and (1-2) at least one component selected from the group consisting of a compound represented by formula (1) (preferably HFO-1234yf) and CF₃I is a component that inhibits the polymerization of component (1-1).

The use of the composition of the present disclosure enables good storage of the refrigerant that is (1-1) at least one component selected from the group consisting of HFO-1132(Z), HFO-1132a, HFO-1123, and FO-1114.

The use of the composition of the present disclosure enables good inhibition of the polymerization of the refrigerant that is (1-1) at least one component selected from the group consisting of HFO-1132(Z), HFO-1132a, HFO-1123, and FO-1114.

The method for producing the refrigerant (1) to be contained in the composition is not limited. For example, various refrigerants can be produced according to known production methods.

HFO-1132(E/Z) for use as a refrigerant can be produced by dehydrofluorination of 1,1,2-trifluoroethane (HFC-143), hydrogenation of (E)- and/or (Z)-1,2-dichloro-1,2-difluoroethylene (CFO-1112(E/Z)), or dehydrochlorination of 1-chloro-1,2-difluoroethane (HCFC-142a).

The total amount of the refrigerant (1) contained in the composition can be determined by gas chromatography.

The refrigerant (1) contained in the composition contains (1-1) at least one component selected from the group consisting of HFO-1132(Z), HFO-1132a, HFO-1123, and FO-1114; and (1-2) at least one component selected from the group consisting of a compound represented by formula (1) (preferably HFO-1234yf) and CF₃I in a total amount (by mass) of preferably 99.5% by mass or more, more preferably 99.9% by mass or more, still more preferably 99.99% by mass or more, and particularly preferably 99.999% by mass or more based on the entire refrigerant.

The refrigerant (1) contained in the composition preferably may consist essentially of (1-1) at least one component selected from the group consisting of HFO-1132(Z), HFO-1132a, HFO-1123, and FO-1114, and (1-2) at least one component selected from the group consisting of a compound represented by formula (1) (preferably HFO-1234yf) and CF₃I.

The refrigerant (1) contained in the composition may contain compounds other than (1-1) at least one component selected from the group consisting of HFO-1132(Z), HFO-1132a, HFO-1123, and FO-1114, and (1-2) at least one component selected from the group consisting of a compound represented by formula (1) (preferably HFO-1234yf) and CF₃I.

The refrigerants may be contain impurities that can possibly be mixed during the production of the refrigerants (unavoidable impurities).

In the case of HFO-1132(Z), examples of impurities include hydrogen fluoride, fluoroethylene, HFO-1123, 1,1,1-trifluoroethane, propylene, acetylene, difluoromethane (HFC-32), trifluoromethane, fluoromethane, HFO-1123, 1,1-difluoroethane (HFC-152a), fluoroethane (HFC-161), 1,1,2-trifluoroethane (HFC-143), 2-chloro-1,1,1-trifluoroethane (HCFC-133b), 1-chloro-1,1,2-trifluoroethane (HCFC-133), 1,1-dichloro-2,2,2-trifluoroethane (HCFC-123), 1-chloro-1,2-difluoroethane (HCFC-142a), 1,2-difluoroethane (HFC-152), chlorodifluoromethane (HCFC-22), 1,1,1,2-tetrafluoroethane (HFC-134a), 1,1,2,2-tetrafluoroethane (HFC-134), pentafluoroethane (HFC-125), HFO-1234yf, 1,2,3,3,3-pentafluoropropene (HFO-1225ye), 1,3,3,3-tetrafluoropropene (HFO-1234ze), 1,3,3,3-tetrafluoropropene (HFO-1234ze), fluoroethylene (HFO-1141), 3,3,3-trifluoropropene (HFO-1243zf), 1,1-difluoroethylene (HFO-1132a), 1-chloro-2,2-difluoroethylene (HCFO-1122), 1-chloro-1,2-difluoroethylene (HCFO-1122a), and ethylene.

If the refrigerant (1) contained in the composition contains impurities of the refrigerant, the content of the impurities is not limited, and may be, for example, about 0.1 ppm or more and 10,000 ppm or less on a weight basis. Within this range, the effect of stabilizing the refrigerant in the refrigerant composition is less likely to be interfered with.

If the refrigerant (1) is allowed to be present in the composition of the present disclosure, preferably (1-1) at least one component selected from the group consisting of HFO-1132(Z), HFO-1132a, HFO-1123, and FO-1114 in an amount of 90% by mass or lower and 10% by mass or higher is allowed to be present together with (1-2) at least one component selected from the group consisting of a compound represented by formula (1) (preferably HFO-1234yf) and CF₃I in an amount of 10% by mass or higher and 90% by mass or lower based on the entire refrigerant.

If the refrigerant (1) is allowed to be present together, more preferably (1-1) at least one component selected from the group consisting of HFO-1132(Z), HFO-1132a, HFO-1123, and FO-1114 in an amount of 90% by mass or lower and 10% by mass or higher is allowed to be present together with (1-2) at least one component selected from the group consisting of a compound represented by formula (1) (preferably HFO-1234yf) and CF₃I in an amount of 90% by mass or lower and 10% by mass or higher based on the entire refrigerant.

### (2) Oxygen

The composition of the present disclosure contains the refrigerant (1), and can be used for the same purposes as refrigerants.

The composition of the present disclosure contains (1) a refrigerant and (2) oxygen, and can store the refrigerant (1) in a gas-liquid state composed of a gas phase and a liquid phase in an airtight container, or can inhibit polymerization, and allows the refrigerant (1) to be present with the oxygen (2) in a concentration of 1 ppm by volume or more and 10,000 ppm by volume or less at a temperature of 25°C in the gas phase.

Preferably, allowing the oxygen (2) to be present together in the composition of the present disclosure is the step of allowing the oxygen (2) in a concentration of 1 ppm by volume or more and 10,000 ppm by volume or less at a temperature of 25°C in the gas phase.

In the refrigerant (1), if the refrigerant that is (1-1) at least one component selected from the group consisting of HFO-1132(Z), HFO-1132a, HFO-1123, and FO-1114 is stored, particularly with oxygen, and if the refrigerant alone is stored, a polymer of the refrigerant may form and cause a decrease in pressure.

Even if a composition contains oxygen (2) in addition to the refrigerant (1), the present disclosure makes it possible to decrease the polymerization rate of (1-1) at least one component selected from the group consisting of HFO-1132(Z), HFO-1132a, HFO-1123, and FO-1114 to around the polymerization rate of HFO-1234yf, and does not cause a decrease in pressure, and provides excellent storage stability by allowing (1-2) at least one component selected from the group consisting of a compound represented by formula (1) (preferably HFO-1234yf) and CF₃I to be present together.

The composition of the present disclosure enables good storage of a composition containing a refrigerant and enables good inhibition of the polymerization of the refrigerant.

In the composition of the present disclosure, the concentration of the oxygen (2) to be present together with the refrigerant (1) in a gas phase refers to the oxygen concentration at gas temperature of 25°C. Because the refrigerant (1) is retained under pressure in a state in which a gas phase and a liquid phase are both present (gas-liquid coexistence) in an airtight container, the refrigerant (1) indicates a saturated vapor pressure in a gas phase. The concentration of the oxygen (2) refers to the oxygen content in a gas phase of the refrigerant (1).

The concentration of the oxygen (2) to be present with the refrigerant (1) is 1 ppm by volume or more, preferably 3 ppm by volume or more, more preferably 10 ppm by volume or more, and still more preferably 20 ppm by volume or more at a temperature of 25°C.

In the refrigerant (1), if the refrigerant that is (1-1) at least one component selected from the group consisting of HFO-1132(Z), HFO-1132a, HFO-1123, and FO-1114 is stored with oxygen, and if the refrigerant alone is stored, a polymer of the refrigerant may form and cause a decrease in pressure. The concentration of the oxygen (2) that is allowed to be present with the refrigerant (1) is preferably 10,000 ppm by volume or less, more preferably 1,000 ppm by volume or less, still more preferably 100 ppm by volume or less, and particularly preferably 50 ppm by volume or less at a temperature of 25°C, which are the ranges of acceptable oxygen concentration.

Because of the concentration of the oxygen (2) being 10,000 ppm or less in a gas phase, allowing (1-2) at least one component selected from the group consisting of a compound represented by formula (1) (preferably HFO-1234yf) and CF₃I to be present together enables sufficient prevention of a reaction such as the polymerization of (1-1) at least one component selected from the group consisting of HFO-1132(Z), HFO-1132a, HFO-1123, and FO-1114 in a liquid phase and in a gas phase.

A portion of the refrigerant (1) in a storage container may be taken out, and then the remaining refrigerant (1) may be continuously stored in the container. In this case, the volume of the gas phase in the storage container increases; however, even in the gas phase with an increased volume, the oxygen concentration is preferably maintained at 10,000 ppm by volume or less. The oxygen concentration in a gas phase is typically in equilibrium with the concentration of oxygen in the refrigerant (1) in a liquid phase. Thus, the oxygen concentration in a gas phase is assumed to not substantially increase unless oxygen enters the storage container when a portion of the refrigerant (1) is taken out.

The concentration of oxygen (2) in a gas phase is adjusted by pressurizing the refrigerant (1) to form a liquid, subjecting the liquid to vacuum degassing beforehand, and injecting it into an airtight container in which the concentration of oxygen (2) is decreased to preferably 10,000 ppm by volume or less. After the liquid of the refrigerant (1) is injected into the container, the space within the container is rapidly saturated with gas from the liquid. The concentration of oxygen (2) in a gas phase filled with the saturated gas of the refrigerant (1) reaches preferably 10,000 ppm by volume or less.

When an airtight container is subjected to vacuum degassing, non-condensable gases such as nitrogen are also removed along with oxygen. The total content of the non-condensable gases is preferably not more than 1.5% by volume (15,000 ppm) at a temperature of 25.0°C.

### (3) Other components Contained in Refrigerant Composition

The composition of the present disclosure further mixed with at least a refrigeration oil can be used in obtaining a working fluid for a refrigerating machine.

The refrigerant composition may further contain at least one other component in addition to the refrigerant (1) and the oxygen (2). Such other components are, for example, at least one member selected from the group consisting of water, tracers, air, impurities, and by-products.

The content of the at least one other component in the refrigerant composition is preferably 0.01 mass% or higher on a mass basis based on the entire refrigerant composition. The content of the at least one other component in the refrigerant composition is preferably 1 mass% or lower, and more preferably 0.1 mass% or lower on a mass basis based on the entire refrigerant composition.

### (4) Refrigeration Oil-containing Working Fluid

The composition of the present disclosure preferably further contains refrigeration oil and is used as a working fluid in a refrigerating machine (refrigeration oil-containing working fluid).

Specifically, the refrigeration oil-containing working fluid can be obtained by mixing the refrigerant or refrigerant composition with a refrigeration oil used in a compressor of a refrigerating machine.

The refrigeration oil-containing working fluid changes its formula during the refrigeration cycle. Specifically, the refrigeration oil-containing working fluid has a relatively high refrigeration oil content in the compressor and a relatively low refrigeration oil content during the period over which the working fluid in the form of mist is discharged from the compressor to circulate through the refrigeration cycle and return to the compressor.

The refrigeration oil content in the refrigeration oil-containing working fluid is preferably 30 mass% or higher and 70 mass% or lower in a compressor.

The refrigeration oil content in the refrigeration oil-containing working fluid is preferably 1 ppm by mass or more and 20 mass% or lower, and more preferably 10 mass% during the period from the discharge from the compressor to the return to the compressor.

The base oil of the refrigeration oil is preferably, but is not limited to, a lubricating oil. For example, a wide range of known lubricating oils used in refrigerants are usable.

The specific lubricant for use is preferably at least one lubricating oil selected from the group consisting of polyalkylene glycol (PAG), polyol ester (POE), and polyvinyl ether (PVE). Examples of polyalkylene glycol (PAG) include SUNICE P56, produced by Japan Sun Oil Company, Ltd. Examples of polyol ester (POE) include Ze-GLES RB32, produced by JX Nippon Oil & Energy Corporation.

The refrigeration oil preferably further contains at least one additive in addition to the base oil. The additive is preferably at least one component selected from the group consisting of compatibilizing agents, ultraviolet fluorescent dyes, stabilizers, polymerization inhibitors, antioxidants, extreme-pressure agents, acid scavengers, oxygen scavengers, copper deactivators, anticorrosive agents, oily agents, and antifoaming agents.

### (5) Preparation Method for Refrigerant Composition and Refrigeration Oil-containing Working Fluid

The method for preparing the composition of the present disclosure is not limited.

The method for preparing the refrigerant composition is preferably, for example, a method of mixing the refrigerant (1), oxygen (2), and some other components in a predetermined ratio. In this mixing process, the lubricating oil and/or other additives described above can be added as appropriate.

### [2] Method for Storing Refrigerant

A method for storing a refrigerant (1) according to the present disclosure is a method for storing a refrigerant (1) in a gas-liquid state composed of a gas phase and a liquid phase in an airtight container,
the refrigerant (1) comprising
   (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
   (1-2) at least one component selected from the group consisting of a compound represented by formula (1) and trifluoroiodomethane (CF₃I),
the compound being represented by formula (1): 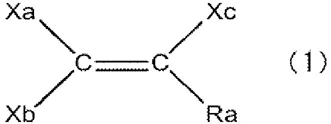 wherein
   Xa, Xb, and Xc represent a hydrogen atom or a fluorine atom, and
   Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

In the method for storing a refrigerant (1) according to the present disclosure, preferably the refrigerant (1-1) is present in an amount of 10% by mass or higher and 90% by mass or lower, and the refrigerant (1-2) is present in an amount of 10% by mass or higher and 90% by mass or lower based on the entire refrigerant.

The components for use in the method for storing a refrigerant, such as refrigerants and refrigeration oil, can be those described in section "Composition" above.

### Storage Container

In the method for storing a refrigerant or the method for inhibiting polymerization according to the present disclosure, the storage container for the refrigerant composition is preferably an airtight container capable of storing the refrigerant (1) in a gas-liquid coexistence state under internal pressure. The storage container for the refrigerant composition does not require special structures or structural materials and can have a wide range of forms and functionality.

The storage container for the refrigerant composition can be preferably, for example, a pressure-resistant container such as a storage tank that is a fixed storage container, a filling tank for use in transportation, or a secondary filling tank (service cans).

The structural materials for use in storage containers for the refrigerant composition are preferably, for example, carbon steel, manganese steel, chromium molybdenum steel, other low-alloy steel, stainless steel, aluminum alloy, etc.

### [3] Method for Inhibiting Polymerization of Refrigerant

The method for inhibiting the polymerization of a refrigerant (1) according to the present disclosure is a method for inhibiting the polymerization of a refrigerant (1) in a gas-liquid state composed of a gas phase and a liquid phase in an airtight container,
the refrigerant (1) comprising
   (1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
   (1-2) at least one component selected from the group consisting of a compound represented by formula (1) and trifluoroiodomethane (CF₃I),
the compound being represented by formula (1): 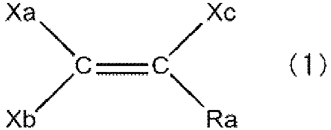 wherein
   Xa, Xb, and Xc represent a hydrogen atom or a fluorine atom, and
   Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

In the method for inhibiting the polymerization of a refrigerant (1) according to the present disclosure, the refrigerant (1-1) is present in an amount of 10% by mass or higher and 90% by mass or lower, and the refrigerant (1-2) is present in an amount of 10% by mass or higher and 90% by mass or lower based on the entire refrigerant.

The components for use in the method for inhibiting the polymerization of a refrigerant, such as refrigerants and refrigeration oil, can be those described in section "Composition" above.

### [4] Evaluation Method for Storage Method for Refrigerant Composition and Refrigeration Oil-containing Working Fluid

The method for storing a refrigerant (storage method) and the method for inhibiting the polymerization of a refrigerant (polymerization inhibition method) according to the present disclosure can inhibit a reaction such as the polymerization of a refrigerant (1-1) that is at least one component selected from the group consisting of HFO-1132(Z), HFO-1132a, HFO-1123, and FO-1114, of the refrigerant (1) filled in a gas-liquid state in an airtight container, and thus can maintain the purity of the refrigerant (1) and its high quality as a refrigerant.

The storage method and the polymerization inhibition method according to the present disclosure can inhibit the formation of, for example, a solid polymeric product in an airtight container, and thus eliminate the risk of the blockage of valves or contamination of the refrigerant system with foreign matter.

The storage method and the polymerization inhibition method according to the present disclosure are inexpensive, and can inhibit the polymerization of the refrigerant (1) and store the refrigerant (1) in an excellent manner.

In the storage method and the polymerization inhibition method according to the present disclosure, the evaluation of refrigerant storage can be performed, for example, by placing the refrigerant (1) in a gas-liquid state together with a predetermined amount of oxygen (2) in an airtight container, heating the entirety to a predetermined temperature, maintaining it at a constant temperature for a predetermined period of time, identifying the reaction product in a liquid phase of the refrigerant (1), and analyzing the reaction product.

This evaluation corresponds to an accelerated test with heat load.

The heating temperature can be set within the range of -70°C or higher and 300°C or lower, which is a temperature setting range for a thermostatic bath. The heating treatment time can be set freely. Identification and analysis of the reaction product can be performed, for example, according to the methods described in the Examples below.

### Examples

The following describes the present disclosure with reference to Examples in more detail. However, the present disclosure is not limited to the embodiments of the Examples.

### Method for Storing Refrigerant and Method for Inhibiting Polymerization of Refrigerant

### (1) Evaluation Method for Production Amount of Polymeric Composition in Polymerization

The following describes the experiment method common in the evaluation of polymerization.

A 200-cc SUS316 pressure-resistant container (maximum operating temperature: 300°C, maximum allowable working pressure: 20 MPa) was sealed and evacuated to vacuum. 150 g of perfluorocyclobutane was added to the container. Further, 0.16 mol of a gas containing HFO-1123 or at least one member selected from the group consisting of HFO-1132(Z), HFO-1132a, and HFO-1234yf was added to the container. The container was heated in a water bath to maintain the temperature inside the container at 25°C. After the internal temperature of the container was confirmed to be stable, 1 g of a solution of 8 mass% bis(2,2,3,3,4,4,5,5,6,6,7,7-dodecafluoroheptanoyl)peroxide in perfluorohexane was added as an initiator, and polymerization was started. Polymerization was continued while the temperature was maintained at 25°C. After two hours since the start of polymerization, the internal gas was discharged to end the polymerization. After the end of polymerization, the solids in the container were taken out and dried by heating to 120°C in vacuum, followed by measuring the weight. The obtained solids were dissolved in deuterated acetone, and each spectrum of ¹H-NMR, ¹³C-NMR, and ¹⁹F-NMR was measured.

### (1-1) Polymerization of HFO-1123 Alone

In accordance with the common method, 13.2 g of HFO-1123 was placed in a container, and polymerization was performed. The amount of the solids obtained after polymerization was 2.0 g. The solid substance was identified by peak assignment in the measured NMR spectra and confirmed to be a homopolymer of HFO-1123. The HFO-1123 used in the polymerization was 0.024 mol.

### (1-2) Polymerization of HFO-1132a Alone

In accordance with the common method, 10.2 g of HFO-1132a was placed in a container, and polymerization was performed. The amount of the solids obtained after polymerization was 3.9 g. The solid substance was identified by peak assignment in the measured NMR spectra and confirmed to be a homopolymer of HFO-1132a. The HFO-1132a used in the polymerization was 0.061 mol.

### (1-3) Polymerization of HFO-1132(Z) Alone

In accordance with the common method, 10.2 g of HFO-1132(Z) was placed in a container, and polymerization was performed. The amount of the solids obtained after polymerization was 0.7 g. The solid substance was identified by peak assignment in the measured NMR spectra and confirmed to be a homopolymer of HFO-1132(Z). The HFO-1132(Z) used in the polymerization was 0.011 mol.

### (1-4) Polymerization of HFO-1234yf Alone

In accordance with the common method, 18.4 g of HFO-1234yf was placed in a container, and polymerization was performed. The amount of the solids obtained after polymerization was 0.15 g. The solid substance was identified by peak assignment in the measured NMR spectra and confirmed to be a homopolymer of HFO-1234yf. The HFO-1234yf used in the polymerization was 0.0013 mol.

### (1-5) Polymerization of HFO-1123 and HFO-1234yf in Weight Ratio of 37/63

In accordance with the common method, 15.9 g of a mixture of HFO-1123 and HFO-1234yf in a weight ratio of 37/63 was placed in a container, and polymerization was performed. The amount of the solids obtained after polymerization was 0.15 g. The solid substance was identified by peak assignment in the measured NMR spectra and confirmed to be a copolymer of HFO-1123 and HFO-1234yf, and to have almost the same monomer formula of the polymer as that (the ratio) of HFO-1123 and HFO-1234yf added to the container. The mixture of HFO-1123 and HFO-1234yf used in the polymerization was 0.0015 mol.

### (1-6) Polymerization of HFO-1123 and HFO-1234yf in Weight Ratio of 80/20

In accordance with the common method, 13.9 g of a mixture of HFO-1123 and HFO-1234yf in a weight ratio of 80/20 was placed in a container, and polymerization was performed. The amount of the solids obtained after polymerization was 0.13 g. The solid substance was identified by peak assignment in the measured NMR spectra and confirmed to be a copolymer of HFO-1123 and HFO-1234yf and to have almost the same monomer formula of the polymer as that (the ratio) of HFO-1123 and HFO-1234yf added to the container. The mixture of HFO-1123 and HFO-1234yf used in the polymerization was 0.0015 mol.

### (1-7) Polymerization of HFO-1123 and HFO-1234yf in Weight Ratio of 90/10

In accordance with the common method, 13.5 g of a mixture of HFO-1123 and HFO-1234yf in a weight ratio of 80/20 was placed in a container, and polymerization was performed. The amount of the solids obtained after polymerization was 0.14 g. The solid substance was identified by peak assignment in the measured NMR spectra and confirmed to be a copolymer of HFO-1123 and HFO-1234yf and to have almost the same monomer formula of the polymer as that (the ratio) of HFO-1123 and HFO-1234yf added to the container. The mixture of HFO-1123 and HFO-1234yf used in the polymerization was 0.0017 mol.

### (1-8) Polymerization of HFO-1123 and HFO-1234yf in Weight Ratio of 93/7

In accordance with the common method, 13.2 g of a mixture of HFO-1123 and HFO-1234yf in a weight ratio of 80/20 was placed in a container, and polymerization was performed. The amount of the solids obtained after polymerization was 0.14 g. The solid substance was identified by peak assignment in the measured NMR spectra and confirmed to be a copolymer of HFO-1123 and HFO-1234yf and to have almost the same monomer formula of the polymer as that (the ratio) of HFO-1123 and HFO-1234yf added to the container. The mixture of HFO-1123 and HFO-1234yf used in the polymerization was 0.0074 mol.

### (2) Evaluation Method for Refrigerant Storage and for Polymerization Inhibition

The following describes the experiment method common in the evaluation of storage or polymerization inhibition.

A 40-cc SUS316 pressure-resistant container (maximum operating temperature: 300°C, maximum allowable working pressure: 20 MPa) was sealed and evacuated to vacuum. Subsequently, the pressure-resistant container was charged with a predetermined amount of oxygen, and then with a predetermined amount of a liquefied refrigerant with a purity of 99.5% or higher. The container in which the refrigerant and oxygen were present together was allowed to stand in a thermostatic bath kept at 50°C, and the internal temperature and the internal pressure of the container were observed.

Pressure is gauge pressure unless otherwise specified.

### (2-1) Evaluation of Presence of Oxygen with HFO-1123

The container described above was charged with oxygen at an absolute pressure of 0.1 MPa at 25°C such that the amount of the oxygen was 14,000 ppm by volume when present with HFO-1123, and then the container was cooled with liquid nitrogen. Thereafter, the container was charged with 9.4 g of HFO-1123 so as to coexist at a saturated vapor pressure almost equivalent to that of HFO-1123 at 50°C. The container was allowed to stand in a thermostatic bath kept at 50°C, and the internal temperature and the internal pressure of the container were observed. The internal pressure at which the internal temperature reached 50°C was 3.65 MPa. After 85 hours, the internal pressure was confirmed to have begun to decrease. The internal pressure decreased continuously; after 240 hours, the internal pressure reached 0.65 MPa. The container was taken out from the thermostatic bath, and the internal gas was released. The solids adhered to the inside were taken out and dried by heating to 120°C in vacuum. The measured weight was 8.3 g. The obtained solids were dissolved in deuterated acetone, and each spectrum of ¹H-NMR, ¹³C-NMR, and ¹⁹F-NMR was measured. The solid substance identified by peak assignment in the NMR spectra was confirmed to be a homopolymer of HFO-1123.

### (2-2) Evaluation of Low-oxygen Concentration in HFO-1123

The container described above was cooled with liquid nitrogen, and then charged with 9.4 g of HFO-1123 so as to achieve a saturated vapor pressure almost equivalent to that of HFO-1123 at 50°C. The container was allowed to stand in a thermostatic bath kept at 50°C, and the internal temperature and the internal pressure of the container were observed. The internal pressure at which the internal temperature reached 50°C was 3.60 MPa. After 240 hours, the internal pressure was confirmed to have remained unchanged from 3.60 MPa. The container was taken out from the thermostatic bath, and the internal gas was released. Visual observation confirmed that there were no solids adhered to the inside.

### (2-3) Evaluation of Presence of Oxygen with HFO-1234yf

The container described above was charged with oxygen at an absolute pressure of 0.02 MPa at 25°C such that the amount of the oxygen was 14,000 ppm by volume when present with HFO-1234yf, and then the container was cooled with liquid nitrogen. Thereafter, the container was charged with 3.0 g of HFO-1234yf so as to coexist at a saturated vapor pressure almost equivalent to that of HFO-1123 at 50°C. The container was allowed to stand in a thermostatic bath kept at 50°C, and the internal temperature and the internal pressure of the container were observed. The internal pressure at which the internal temperature reached 50°C was 1.20 MPa. After 240 hours, the internal pressure was confirmed to have remained unchanged from 1.20 MPa. The container was taken out from the thermostatic bath, and the internal gas was released. Visual observation confirmed that there were no solids adhered to the inside.

### (2-4) Evaluation of Oxygen Present with HFO-1123 and HFO-1234yf in Weight Ratio of 90/10

The container described above was charged with oxygen at an absolute pressure of 0.09 MPa at 25°C such that the amount of the oxygen was 14,000 ppm by volume when present with HFO-1123, and then the container was cooled with liquid nitrogen. Thereafter, the container was charged with 8.4 g of HFO-1123 so as to coexist at a saturated vapor pressure almost equivalent to that of a mixture gas of HFO-1123 and HFO-1234yf in a weight ratio of 90/10 at 50°C. The container was allowed to stand in a thermostatic bath kept at 50°C, and the internal temperature and the internal pressure of the container were observed. The internal pressure at which the internal temperature reached 50°C was 3.40 MPa. After 240 hours, the internal pressure was confirmed to have remained unchanged from 3.40 MPa. The container was taken out from the thermostatic bath, and the internal gas was released. Visual observation confirmed that there were no solids adhered to the inside.

### (3) Stability Test Results in Refrigerant Storage Method or Polymerization Inhibition Method

In a mixture refrigerant of HFO-1123 and HFO-1234yf, HFO-1234yf is allowed to be present together with HFO-1123. Thus, even when oxygen was present in the refrigerant composition, a homopolymer of HFO-1123 and a copolymer of HFO-1123 and HFO-1234yf, which are problematic solid products in practical use, were not observed in a liquid phase, indicating that no polymerization occurred.

In contrast, a refrigerant composed only of HFO-1123, which HFO-1234yf was not present together with, showed a formation of a homopolymer of HFO-1123 when oxygen was present in the refrigerant composition.

The refrigerant storage method or polymerization inhibition method according to the present disclosure allows (1-1) a component such as HFO-1123 to be present with (1-2) a component such as HFO-1234yf (refrigerant (1)) as a method for storing the refrigerant (1) in a refrigerant composition containing the refrigerant (1) and (2) oxygen in an airtight container or a method for inhibiting the polymerization of the refrigerant (1). Due to this, the method can be evaluated as being effective as a stable storage method and as being able to inhibit the polymerization of the component such as HFO-1123 over a long time even when the refrigerant (1) is allowed to be present with the oxygen (2) with the concentration of the oxygen (2) in a gas phase being about 14,000 ppm by volume at a temperature of 25°C.

The refrigerant storage method or polymerization inhibition method according to the present disclosure can inhibit the polymerization of a component such as HFO-1123. Thus, it is possible to provide a method for storage and transportation while inhibiting the self-polymerization of a component such as HFO-1123 during storage or transportation and maintaining high quality without decreasing the quality of the refrigerant.

## Claims

1. A composition comprising
(1) a refrigerant, and
(2) oxygen,
the refrigerant (1) comprising
(1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
(1-2) at least one component selected from the group consisting of a compound represented by formula (1) and trifluoroiodomethane (CF₃I),
the compound being represented by formula (1): 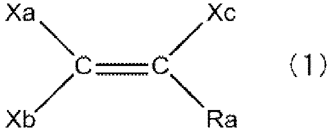 wherein
Xa, Xb, and Xc represent a hydrogen atom or a fluorine atom, and
Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or fluorine atom as a substituent), wherein
the concentration of the oxygen (2) is 1 ppm by volume or more and 10,000 ppm by volume or less at a temperature of 25°C.

2. The composition according to claim 1,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.

3. A method for storing a refrigerant (1) in a gas-liquid state composed of a gas phase and a liquid phase in an airtight container,
the refrigerant (1) comprising
(1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
(1-2) at least one component selected from the group consisting of a compound represented by formula (1) and trifluoroiodomethane (CF₃I),
the compound being represented by formula (1): 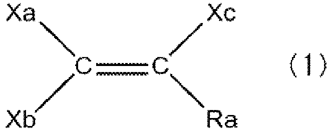 wherein
Xa, Xb, and Xc represent a hydrogen atom or a fluorine atom, and
Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

4. The method according to claim 3,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.

5. A method for inhibiting polymerization of a refrigerant (1) in a gas-liquid state composed of a gas phase and a liquid phase in an airtight container,
the refrigerant (1) comprising
(1-1) at least one component selected from the group consisting of cis-1,2-difluoroethylene (HFO-1132(Z)), 1,1-difluoroethylene (HFO-1132a), trifluoroethylene (HFO-1123), and tetrafluoroethylene (FO-1114), and
(1-2) at least one component selected from the group consisting of a compound represented by formula (1) and trifluoroiodomethane (CF₃I),
the compound being represented by formula (1): 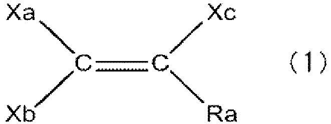 wherein
Xa, Xb, and Xc represent a hydrogen atom or a fluorine atom, and
Ra represents -CH₃, -CHF₂, -CH₂F, -CF₃, -CX_{d}=CXₑX_{f} (wherein X_{d}, Xₑ, and X_{f} represent a hydrogen atom or a fluorine atom), or -ORb (wherein Rb represents a C₁₋₃ hydrocarbon group having a hydrogen atom or a fluorine atom as a substituent),
the method comprising adjusting the concentration of the oxygen (2) to 1 ppm by volume or more and 10,000 ppm by volume or less at a temperature of 25°C in the gas phase.

6. The method according to claim 5,
wherein
the refrigerant (1-1) is present in an amount of 10% by mass or higher and 90% by mass or lower, and
the refrigerant (1-2) is present in an amount of 10% by mass or higher and 90% by mass or lower based on the entire refrigerant.
